# EUROPEAN PATENT APPLICATION

(11) **EP 1 819 053 A1**
(43) Date of publication of application: **15.08.2007**
(21) Application number: 04799934.7
(22) Date of filing: 29.11.2004
(51) Int. Cl.: H03M 7/00, G07G 1/06

(54) **METHOD FOR CREATING A CHARACTER STRING EXCLUDING INHIBITED TERM**

(71) Applicant: Global Value Corporation, 1-4, Shinjuku 2-chome Shinjuku-ku Tokyo 160-0022 (JP)
(72) Inventor: NAKAMURA, Norio, GLOBAL VALUE CORPORATION, Tokyo 1600022 (JP)
(74) Representative: Skone James, Robert Edmund
(86) International application number: PCT/JP2004/018078
(87) International publication number: WO 2006/057069

(57) **Abstract**

There is provided a method for transforming numeric information into a character string which is generated by a combination of characters and symbols, whereby a character string can be generated which does not make up a combination of character strings which violates the public order and morals, including a storage unit for storing inhibited terms, a table creating unit for creating an inhibited term exclusion table based on the inhibited terms stored in the storage unit and a character string generating unit for generating a character string which excludes the inhibited terms based on the table created by the table creating unit, wherein a character string is generated which contains no such inhibited terms when transforming numeric information into a character string.

## Description

### Technical Field

The present invention relates to a method for creating a character string excluding inhibited term.

### Background Art

Conventionally, there are passwords as character strings generated by combinations of characters and symbols. A computer creates and issues to a user a character string made up of on the order of 10 arbitrary alphabetical characters as a temporary password before a proper password is registered. In the case of alphabetical characters, there is a low possibility that a word or a sentence which causes users to feel uncomfortable is created by a combination of on the order of 10 alphabetical characters.

In the case of character strings made up of Japanese kana characters, however, there has occurred a case where words which violate the public order and morals and hence which cause users to feel uncomfortable are created by a combination of two characters.

In recent years, products to which seals having numeric strings are affixed are sold as sales campaigns. In the case of numeric strings like this, however, a numeric string is made up of 10 numerals from "0" to "9" and when attempting to sell products which each are given a unique number, numbers made up of a tremendously large number of digits in length are necessary depending upon the quantity of products to be sold, and there are caused drawbacks that users make errors in inputting the numbers when they input them and that other numbers are easily associated with. In addition, the applicant for this patent application has disclosed a technique for printing character strings which make up passwords on receipts which are issued to those who buys products (for example, Japanese Patent Application No. 2003-53908).

### Disclosure of the Invention

Then, there has been a demand to use Japanese kana characters of about 46 characters from "a" to "n" so as to indicate character strings with fewer digits. In addition, as has been described above, there has also been a demand for a character string creating method which can exclude combinations of kana characters which cause users to feel uncomfortable when they see or hear them.

Then, the invention was made in view of the situations and the problem that the invention is to solve is to provide a method for transforming numeric information into a character string which is created by a combination of characters and symbols in which a character string is created in such a manner as not to contain a combination of kana characters which violate the public order and morals.

According to a first aspect of the invention, there is provided a method for transforming numeric information into a character string which is created by a combination of characters and symbols including a storage unit for storing inhibited terms, a table creating unit for creating an inhibited term exclusion table based on the inhibited terms stored in the storage unit and a character string generating unit for generating a character string which excludes the inhibited terms based on the table created by the table creating unit, wherein a character string is generated which contains no such inhibited terms when transforming numeric information into a character string.

According to a second aspect of the invention, there is provided a method as set forth in the first aspect of the invention, wherein the table creating unit handles two characters as a unit.

According to the first aspect of the invention, there is provided the method for transforming numeric information into a character string which is generated by a combination of characters and symbols, whereby a character string can be generated which does not make up a combination of character strings which violates the public order and morals.

In addition, according to the second aspect of the invention, two characters are handled as a unit, whereby numeric information can be transformed into a character string at faster speeds.

### Brief Description of the Drawings

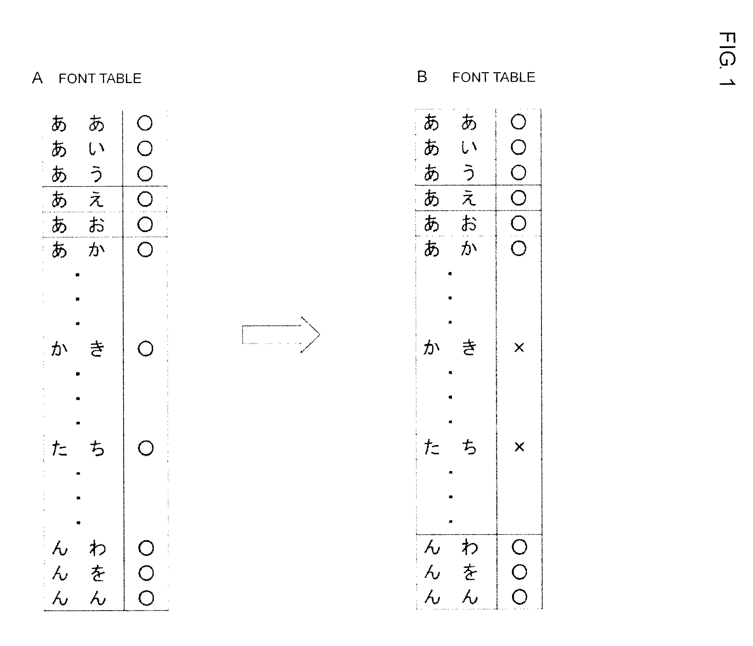

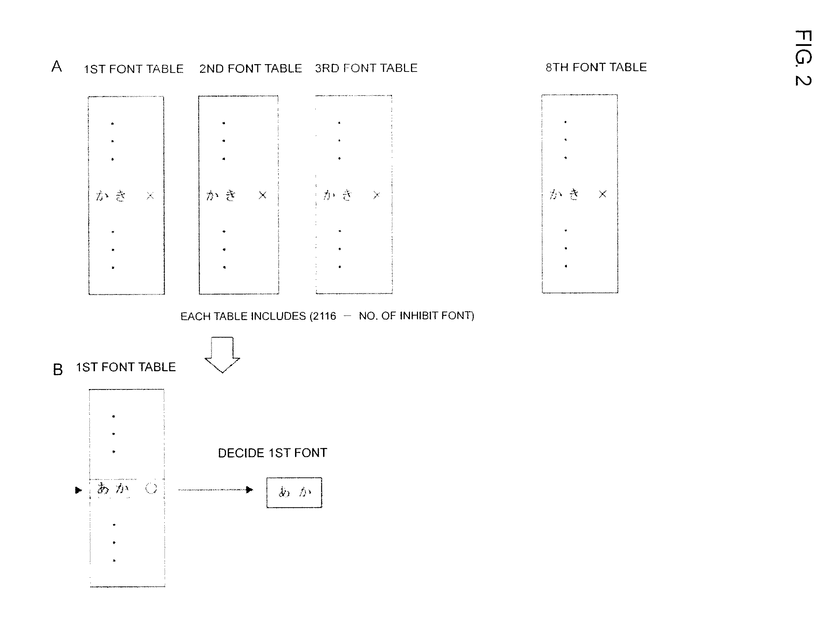

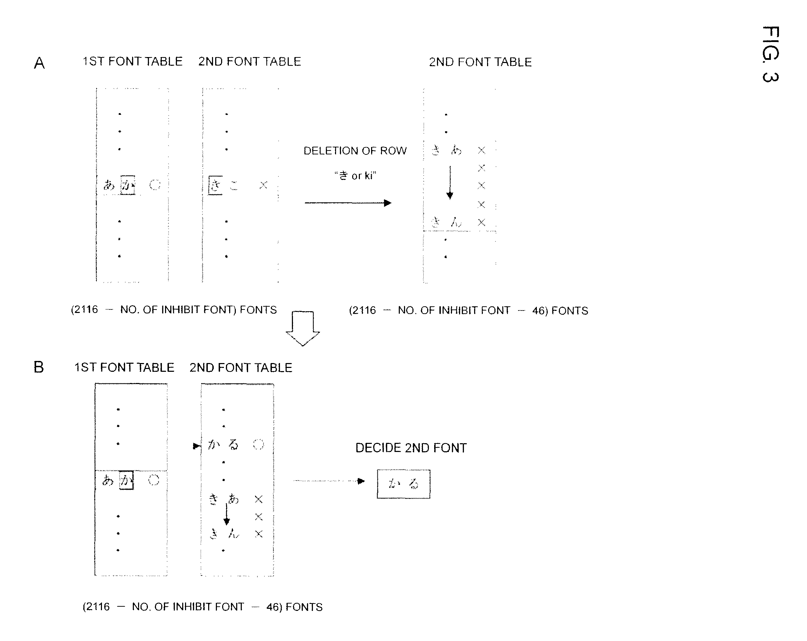

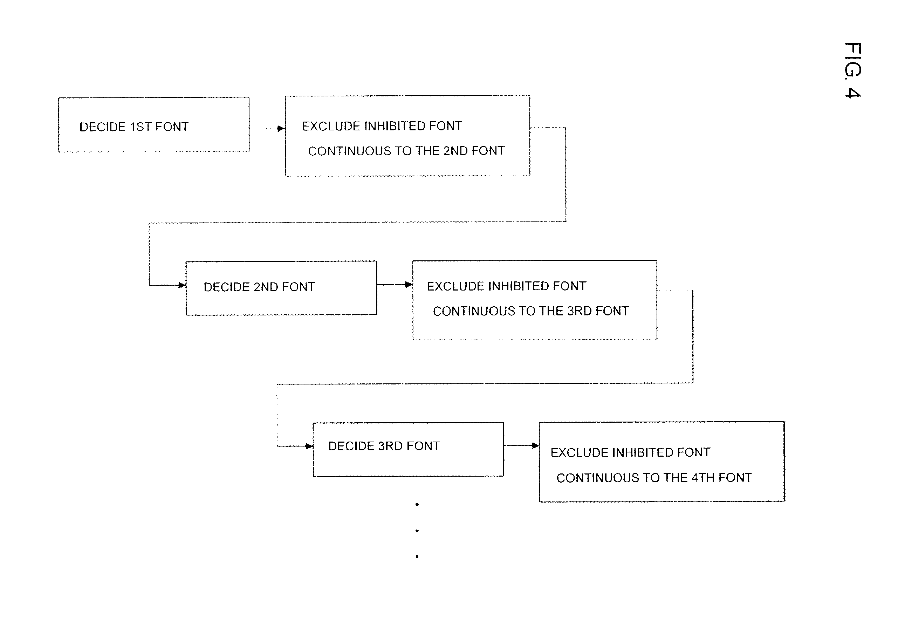

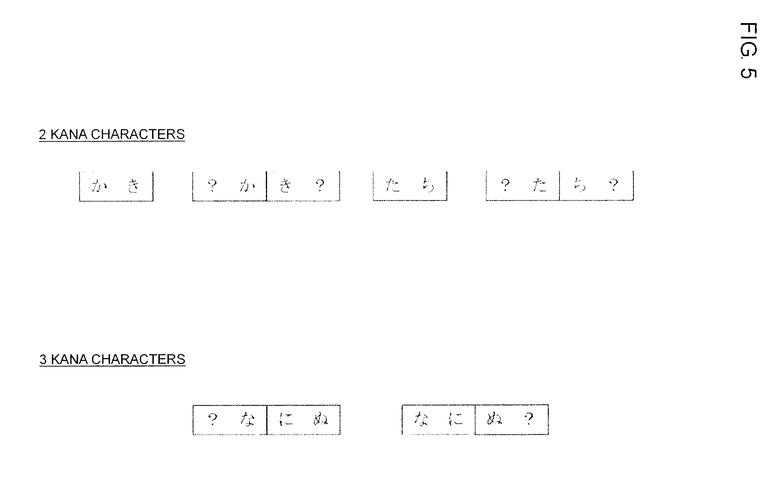

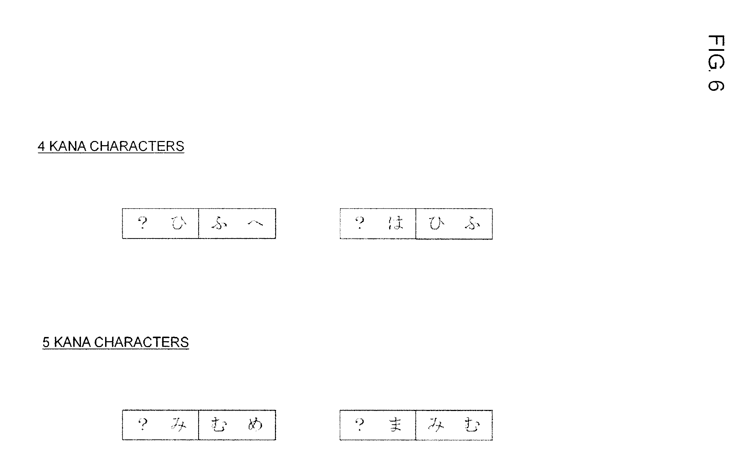

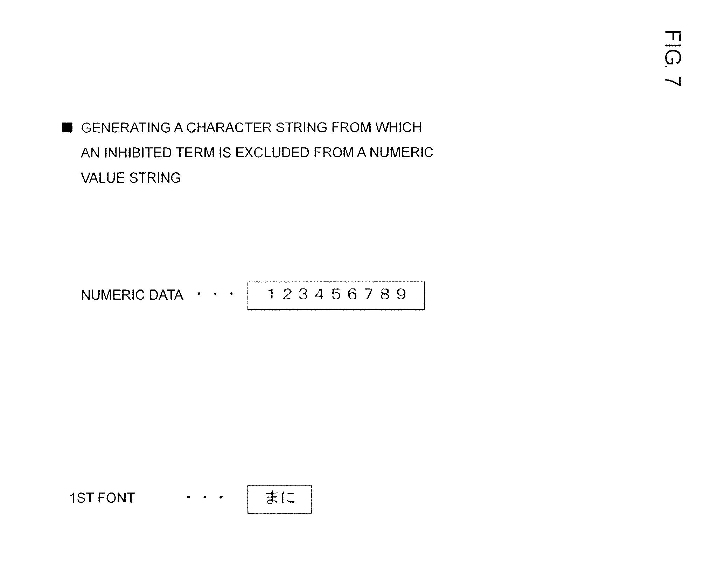

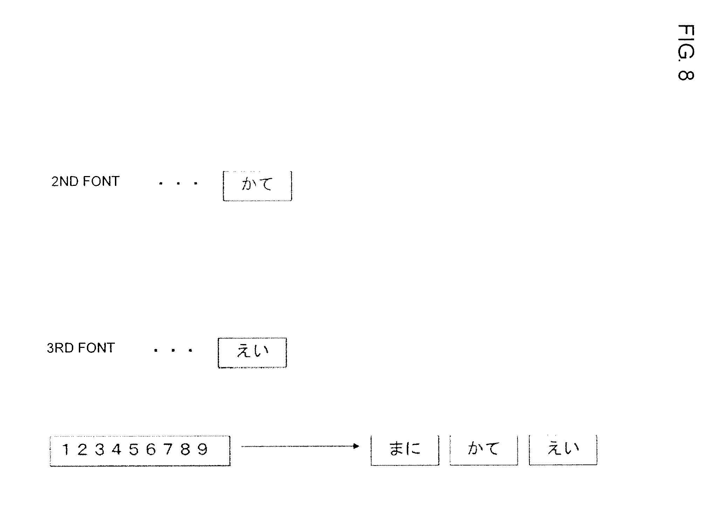

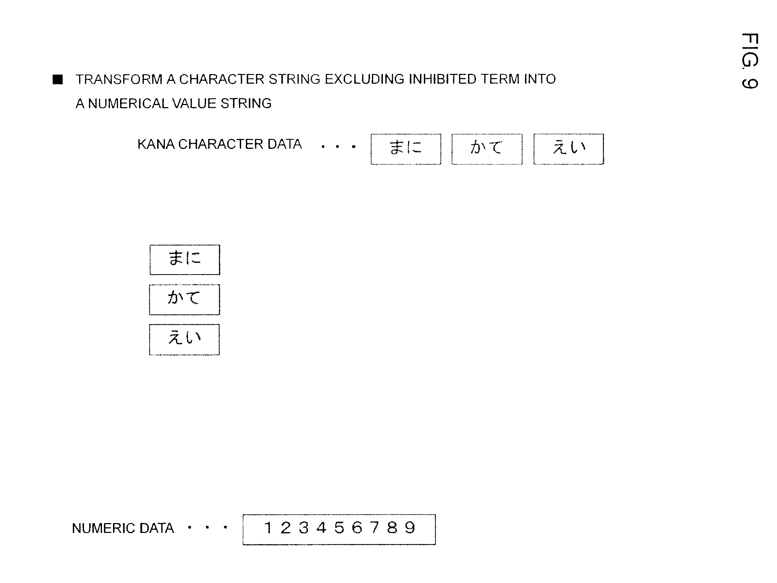

Fig. 1 shows an example in which an inhibited term made up of two characters is excluded from a font table relating to an aspect of the invention, Fig. 2 shows drawings which illustrate a flow of creating a font table according to the aspect of the invention, Fig. 3 shows drawings which illustrate a flow of creating a font table relating the aspect of the invention, and Fig. 4 is a flowchart which shows the creation of font tables relating to the aspect of the invention. In addition, Fig. 5 is a drawing showing a process of an exclusion method according to the aspect of the invention for inhibited terms made up of two characters and three characters, and Fig. 6 is a drawing showing a process of an exclusion method according to the aspect of the invention for inhibited terms made up of four characters and five characters. In addition, Fig. 7 is a drawing which shows a flow of generation of a character string which excludes an inhibited term from a numeric value string according to the aspect of the invention, and Fig. 8 is a drawing which shows a flow of generation of a character string which excludes an inhibited term from a numeric value string according to the aspect of the invention. In addition, Fig. 9 is a drawing which shows a flow of transforming the created kana characters back into the numeric value string according to the aspect of the invention.

### Best Mode for Carrying out the Invention

There is provided a method for transforming numeric information into a character string which is generated by a combination of characters and symbols which includes a storage unit for storing inhibited terms, a table creating unit for creating an inhibited term exclusion table based on the inhibited terms stored in the storage unit, and a character string generating unit for generating a character string from which inhibited terms are excluded based on the table created by the table creating unit, wherein the table creating unit is provided in such a manner as to handle two characters as a unit.

Hereinafter, an embodiment of the invention will be described by reference to the accompanying drawings. Using Figs. 1 to 4, a method will be described for generating a character string which excludes an inhibited term while creating an inhibited term exclusion table. Here, note that a group made up of two characters is referred to as a font.

Fig. 1 shows an example in which inhibited terms of two characters are excluded from a font table. A font table in Fig. 1A shows groups of two Japanese kana characters (hereinafter, referred to simply as kana characters). There are 2116 groups as a result of squaring 46 kana characters. In the event that there exists no inhibited term, a selection is made from those 2116 groups. A circle, that is, "ο" given after, for example, " 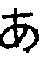 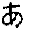 ", which can be phonetically represented as "aa" in English, this being applicable to Japanese kana characters which will be described hereinafter, means that the relevant group can be used, whereas in the event that a cross, or "×" were given there, it would mean that the relevant group cannot be used. In Fig. 1A, no inhibited term is excluded, and hence, Fig. 1A indicates that all the groups shown therein can be used.

Fig. 1B shows an example in which two groups of two kana characters, " 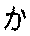 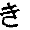 ", which are phonetically represented as "kaki", and " 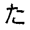 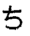 ", which are phonetically represented as "tachi", are excluded therefrom as inhibited terms. In this way, when inhibited terms are excluded from the table, the number of characters that can be used is decreased, and in this case, those inhibited terms are subtracted from 2116 groups, resulting in 2114 groups available for selection. In the event that there are 200 groups of two kana characters which cannot be used as inhibited terms, 200 groups is subtracted from the 2116 groups, resulting in 1916 groups available for selection.

Fig. 2A shows font tables which are created by excluding the inhibited term of two kana characters, " 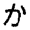 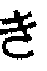 or kaki", and in a case where a character sting of 16 kana characters is generated, eight font tables, first to eighth font tables, are created. Each font table includes groups of two kana characters which result from subtracting the " 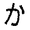 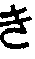 " or kaki" from the 2116 groups.

Fig. 2B shows an example in which a group of " 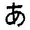 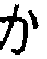 or aka" is selected from the first font table based on a specified algorithm when a selection is made from the first font table.

In Fig. 3A, inhibited terms which result from combination of the first font table and the second font table are excluded. With the " 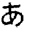 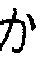 or aka" selected from the first font table, fonts which initiate with a kana character " 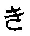 or ki" are excluded so as not to be used. In the example, 46 fonts or groups from " 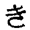 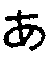 or kia" to " 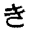 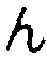 or kin" cannot be used. In Fig. 3B, while a selection from the second font table is performed, the figure shows an example in which a group of " 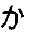 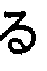 or karu" is selected based on the specified algorithm from the font table from which the groups or fonts which cannot be used are excluded.

Fig. 4 shows a flow of excluding the inhibited terms. Firstly, a determination in the first font table is made.

Next, a group or font which includes an initial kana character which generates an inhibited term in combination with the final kana character of the font in the preceding font table is excluded from the second font table, and the inhibited font is deleted. Next, a determination is made in the second font table from which the inhibited font is deleted. When the determination in the second font table is duly made, a group or font which includes an initial kana character which generates an inhibited term in combination with the final kana character of the font in the preceding font table is excluded from the third font table, and the inhibited font is deleted from the third table. Next, a determination is made in the third font table from which the inhibited font is deleted. When the determination in the third font table is duly made, a group or font which includes an initial kana character which generates an inhibited term in combination with the final kana character of the font in the preceding font table is excluded from the fourth font table, and the inhibited font is deleted from the third table. Next, a determination is made in the fourth font table from which the inhibited font is deleted. In this way, the same process will be repeated until a determination in the eighth font table is made.

Fig. 5 describes a process of exclusion of inhibited terms in an exclusion method for inhibited terms of two kana characters and three kana characters. In the case of an inhibited term of two kana characters, since a font table is made up of groups of two kana characters, a font of two kana characters which matches the inhibited term is excluded. In addition, in the event that the inhibited term is made up of two kana characters of two continuous fonts, fonts which includes initial kana characters which generate the inhibited term in combination with the final kana characters in the preceding font table are excluded from the following font table. In the case of " 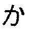 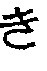 or kaki" and " 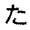 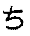 or tachi", the groups or fonts of " 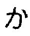 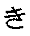 or kaki" and " 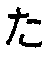 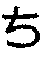 or tachi" are excluded from all the font tables. Since the groups or fonts of " 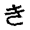 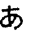 or kia" to " 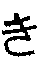 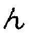 or kin" in the following font table which are combined with the group or font of " 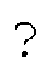 or 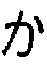 ka" in the preceding font table cannot be used, they are excluded from the following font table. Similarly, groups or fonts of " 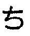 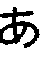 or chia" to " 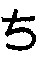 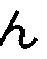 or chin" in the following font table which are combined with the group or font of "? 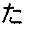 or ?ta" in the preceding font table are excluded from the following font table.

In the case of an inhibited term of three kana characters, in the font tables made up of groups or fonts of two kana characters, although there is no font to be excluded directly therefrom due to the combination of two kana characters therein, there are fonts to be excluded in consideration of combination with fonts in the preceding font table and a font table which follows the relevant font table. In the event that " 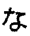 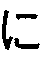 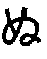 or naninu" constitute an inhibited term, combinations of a font of " ? 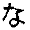 or ?na" and a font of " 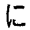 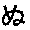 or ninu" and a font of "? 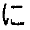 or ?ni" and a font of " 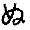 ? or nu?" are to be excluded. Namely, the font of " 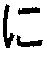 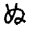 or ninu" in the relevant font table cannot be used in combination with the font of "? 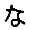 or ?na" in the preceding font table, and hence, the relevant font is excluded, and fonts of " 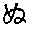 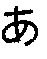 or nua" to " 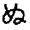 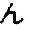 or nun" in the relevant font table cannot used in combination with the font of " ? 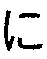 or ?ni" in the preceding font table, and hence, they are excluded. By excluding the fonts in this way, the exclusion of inhibited terms of three kana characters is enabled.

Fig. 6 describes a process of exclusion of inhibited terms in an exclusion method for inhibited terms of four kana characters and five kana characters. In the case of an inhibited term of four kana characters, in the font tables made up of groups or fonts of two kana characters, although there is no font to be excluded directly therefrom due to the combination of two kana characters therein, there are fonts to be excluded in consideration of combination with fonts in the preceding font table and a font table which follows the relevant font table. In the event that " 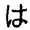 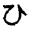 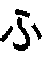 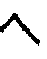 or hahihuhe" constitute an inhibited term, combinations of a font of "? 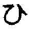 or ?hi" and a font of " 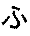 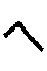 or huhe" and a font of " ? 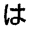 or ?ha" and a font of " 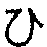 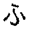 or hihu" are to be excluded. When excluding the fonts of substantially three kana characters or more, since the font tables handle inhibited terms as a unit of two kana characters, inhibited terms are handled in two characters as a unit. In addition, this is because the inhibited term of four kana characters cannot constitute the inhibited term in case only one of the four kana characters differs. A font of " 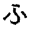 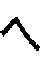 or huhe" in the relevant font table which matches a font of "? 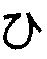 or ?hi" in the preceding font table cannot be used, and hence the relevant font is excluded, and a font of " 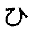 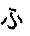 or hihu" in the relevant font table which matches a font of " ? 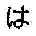 or ?ha" in the preceding font table cannot be used, and hence, the relevant font is excluded.

In the case of an inhibited term of five kana characters, similar to the case of the inhibited term of four kana characters, in the font tables made up of groups or fonts of two kana characters, although there is no font to be excluded directly therefrom due to the combination of two kana characters therein, there are fonts to be excluded in consideration of combination with fonts in the preceding font table and a font table which follows the relevant font table. In the case of an inhibited term made up of kana characters of " 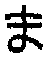 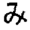 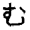 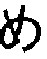 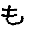 or mamimumemo", a combination of a font of "? 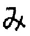 or ?mi" and a font of " 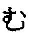 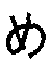 or mume" and a combination of a font of "? 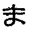 or ?ma" and a font of " 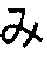 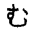 or mimu" are to be excluded. When excluding the fonts of substantially three kana characters or more, since the font tables handle inhibited terms as a unit of two kana characters, inhibited terms are handled in two characters as a unit. In addition, this is because the inhibited term of four kana characters cannot constitute the inhibited term in case only one of the four kana characters differs. A font of " 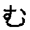 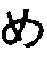 or mume" in the relevant font table which matches a font of "? 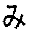 or mi" in the preceding font table cannot be used, and hence the relevant font is excluded, and a font of " 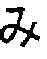 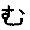 or mimu" in the relevant font table which matches a font of "? 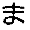 or ?ma" in the preceding font table cannot be used, and hence, the relevant font is excluded.

In this way, the three kana characters are made up of (2 + 1) characters or (1 + 2) characters, and four or more characters are made up of (2 + 2) characters, so that inhibited terms can be excluded.

In Figs. 7 to 8, a method will be described for generating a character string from which an inhibited term is excluded from a numeric value string. In this example, a first font table includes 2000 fonts which results from excluding inhibited terms of two kana characters from the whole font groups, a second font table includes 1500 fonts which results from excluding inhibited terms of two kana characters, as well as fonts which follow an initial kana character of " 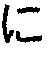 or ni" in the following font table to constitute inhibited terms, and a third font table includes 1650 fonts which results from excluding inhibited terms of two kana characters, as well as fonts which follow an initial kana character of " 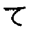 or te" in the following font table to constitute inhibited terms. A numeric value string of "123456789" is used.

In a determination in the first font table, a selection is performed from the first font table which includes fonts which have no kana characters to follow, the numeric value string is divided by the number of fonts, and one is added to a remainder of the division (this being because there exists a case where the remainder is zero) for selection of a font. For example, 123456789 ÷ 2000 = 61728 and a remainder is 789. One is added to the remainder of 789, so that a 790^{th} font is selected. Although not shown in this embodiment, the 790^{th} font in the first font table corresponds to a font " 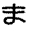 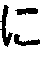 or mani", and the font to be selected is determined in this way.

Next, in a determination in the second font table, a selection is made from the second font table. The quotient calculated when the determination was made in the first font table is divided by the number of fonts in the second font table, and one is added to a resulting remainder. In the example, 61728 ÷ 1500 = 41 and a remainder is 228. One is added to 228 and a 229^{th} font is selected from the second font table. Thus, in this embodiment, by referring to the 229^{th} font in the second font table, a font " 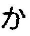 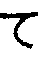 or kate" is determined as a font to be selected from the second font table.

Next, in a determination in the third font table, similar to the second font table, the quotient calculated when the determination was made in the second font table is divided by the number of fonts in the third font table, and one is added to a resulting remainder. In the example, 41 ÷ 1650 = 0 and a remainder is 41. One is added to 41 and a 42^{nd} font is selected from the second font table. Thus, in this embodiment, by referring to the 42^{nd} font in the third font table, a font " 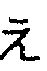 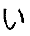 or ei" is determined as a font to be selected from the third font table. This calculation continues until the quotient becomes 0, and a font table is increased each time the calculation is performed, so as to transform a numeric value into kana characters.

By performing the calculations in this way, the numeric value string of "123456789" can be transformed into a kana character string of " 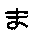 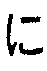 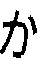 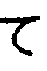 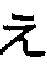 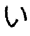 or manikatei" from which the inhibited terms are excluded. In this embodiment, while nine digits are used as the numeric value string, when it is transformed into the kana character string, the number of digits in length can be reduced to six digits, and the character string from which the inhibited terms are excluded can be generated.

Using Fig. 9, a method will be described for transforming the kana character string so generated back into the numeric value string. Basic conditions are the same as those for the transformation from the numeric value string into the kana character string. Numeric value string = the remainder of the first font table + the number of fonts of the first font table x the quotient of the first font table. Quotient of the first font table = the remainder of the second font table + the number of fonts of the second font table x the quotient of the second font table. Quotient of the second font table = the remainder of the third font table + the number of fonts of the third font table x the quotient of the third font table. Consequently, the kana character string is divided into fonts of two kana characters, and the first font table is referred to for the first two kana characters so as to verify to which font the relevant kana characters correspond. The second font table is referred to for the next two kana characters so as to verify to which font the relevant kana characters correspond. The same verification will be performed on the next two kana characters.

In the embodiment, since the first two kana characters of " 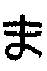 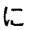 or mani" correspond to the 790^{th} font, the corresponding numeric value is 789, and since the next two kana characters of " 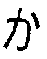 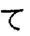 or kate" correspond to the 229^{th} font, the corresponding numeric value is 228, and since the next two kana characters of " 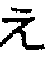 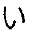 or ei" correspond to the 42^{nd} font, the corresponding numeric value is 41. In addition, since the quotient of the final font is 0, the numeric value string becomes 789 + 2000 x (228 + 1500 x 41), and when this is calculated, the numeric value of 123456789 can be induced.

Inhibited terms are made up of various kana character strings which include broadcasting inhibited terms, discriminating terms, indecent terms and the like. These inhibited terms are stored in the storage unit, and inhibited terms can be added thereto as required. In addition, words or sentences which cause users to feel uncomfortable are included in inhibited terms, and they include, for example, "unpalatable" and "it does not taste good." In addition, designations of companies and famous registered trade names can also be added as inhibited terms, so that character strings which exclude those inhibited terms can be generated.

The configuration of the method for generating a character string which excludes an inhibited term will be described. The table creating unit is made to create a font table which is made up of groups of two kana characters based on inhibited terms stored in the storage unit. Font tables are created sequentially as in the form of a first font table, a second font table and the like, and the number of font tables differs depending upon the length of a kana character strings to be generated.

The character string generating unit calculates a numeric value string, refers to the font tables created by the table creating unit and determines fonts for generation of kana character strings.

While this method is mainly processed on a computer, the method may be incorporated in a desk-top calculator, a POS registration system and the like for operation.

In addition, in the event that no inhibited terms is added or deleted, the transformation is carried out based on the font tables which are subjected to no further revision, whereby the processing can be hastened. In the event that no inhibited terms is added or deleted, the font tables which are created in advance are stored in a ROM or the like so as to facilitate the generation of kana character strings even on machines of a low processing capability.

### Industrial Applicability

A character string with fewer digits or short in length can be indicated on products to be sold under a sales campaign, and character strings which violate the public order and morals or unsuitable for campaigns can be excluded from character strings to be generated. For example, when generating character strings to be affixed to drinks and foods, in addition to character strings which violate the public order or morals, for example, the phrase of "unpalatable" and the sentence reading "it does not taste good." can be added to the inhibited terms, so that character stings which include those character strings can be excluded from those to be generated.

While in the embodiment, the invention has been described as being applied to the character strings made up of Japanese kana characters, the invention is not limited thereto but can be applied not only to various languages such as English and Chinese but also to a combination of symbols such as " (^ - ^)" which is represented by a combination of character strings as is seen in recent electronic mails and a combination of icons as is used on mobile phones.

## Claims

1. A method for transforming numeric information into a character string which is created by a combination of characters and symbols comprising storage means for storing inhibited terms, table creating means for creating an inhibited term exclusion table based on the inhibited terms stored in the storage unit and character string generating means for generating a character string which excludes the inhibited terms based on the table created by the table creating unit, wherein a character string is generated which contains no such inhibited terms when transforming numeric information into a character string.

2. A method as set forth in claim 1, wherein the table creating means handles two characters as a unit.
